# EUROPEAN PATENT APPLICATION

(11) **EP 4 018 809 A1**
(43) Date of publication of application: **29.06.2022**
(21) Application number: 21213924.0
(22) Date of filing: 13.12.2021
(51) Int. Cl.: A01D 42/06, A01D 34/00, A01D 34/86, A01D 75/18, A01B 51/02

(54) **IMPLEMENT CARRIER**

(30) Priority: 28.12.2020 SE 2051562
(71) Applicant: HUSQVARNA AB, 561 82 Huskvarna (SE)
(72) Inventor: EKLUND, Henrik, 560 30 TENHULT (SE); JONSSON, Herman, 561 46 HUSKVARNA (SE)

(57) **Abstract**

The present disclosure relates to an implement carrier 1 comprising an implement carrier body 3 driven by a driving arrangement 5 and configured for connecting alternatingly with at least a first 7 and a second 9 implement. The implement carrier further comprises at least one sensor module 11 adapted for scanning at least a portion of the area surrounding the implement carrier 1 and a connected implement 7, 9, such as containing ultrasound sensors and the like. A moveable sensor module arm 13 is provided, having a proximal end 15 connected to the implement carrier body 3, wherein the sensor module 11 is arranged on the sensor module arm at a distance from the proximal end 15. This allows for a flexible placing of the sensor module11 with regard to the implement carrier 1.

## Description

The present disclosure relates to an implement carrier comprising an implement carrier body driven by a driving arrangement, the implement carrier being configured for connecting alternatingly with at least a first and a second implement, the implement carrier further comprising at least one sensor module adapted for scanning at least a portion of the area surrounding the implement carrier and a connected implement.

### Background

Such implement carriers are useful for carrying out different tasks over a working surface. By changing the implement, a completely different task can be executed, for instance, at a driving range switching from picking up golf balls to mowing grass, or the like. A sensor module allows the implement carrier to operate more or less autonomously or to improve the functioning of the implement for instance by detecting obstacles or other objects. It also makes it possible to assess properties of the working surface, such as for instance estimating grass length to adjust a mowing implement.

One problem associated with implement carriers of this type is that different implements may have different requirements and may affect the operation of the sensor module in different ways.

### Summary

One object of the present disclosure is therefore to obtain a solution that is more adaptable depending on which task is carried out and with which implement. This object is achieved by means of an implement carrier as defined in claim 1. More specifically, in an implement carrier of the initially mentioned kind, a moveable sensor module arm is provided, having a proximal end connected to the implement carrier body. The at least one sensor module is arranged on the sensor module arm at a distance from the proximal end. This means that the sensor module can be moved depending on which implement is used and other circumstances. The sensor module position can thereby be flexible with regard to used implement and other conditions.

Typically, the sensor arm may be movable between a first position adapted for the first implement and a second position adapted for the second implement. The implement carrier may then detect an implement type and adjust the arm accordingly, although this can also be made manually.

The sensor arm may also be configured to move depending on the relative position of the implement in relation to the implement carrier. For instance, the sensor arm can move based on the difference in elevation between the implement carrier and the implement. This makes it possible for instance to raise the robot arm somewhat when the implement reaches a steep upward slope thereby making sure that the sensor module continues to monitor the area in front of the implement rather than the implement itself.

The sensor arm may also be configured to move depending on the steering of the implement carrier. This makes it possible to monitor the area where the implement is going rather than just the area in front of the implement.

The sensor arm may be formed by at least two parts forming a parallelogram, such that moving of the arm alters a viewing direction of the sensor unit. In this way, it is made possible that the sensor module attains the correct inclination automatically when the arm is moved.

The sensor module may include sensors in the group: RADAR, ultrasound sensors, cameras, LIDAR, for instance.

The implement carrier may be driven by wheels or bands, and typically one implement may be a lawn mower.

The sensor module arm may comprise one or more pivotable joints in between the proximal end and the sensor module. This makes the arm even more flexible.

There may be provided connector on the sensor module arm for connecting with a socket on at least one connected implement. This makes it possible to affix the sensor module on the implement in some cases.

The sensor arm may be telescopic and may further be connected to the implement carrier in such a way that it is pivotable about an axis being substantially vertical. This allows the sensor arm to be more extendable and to look sideways and behind the implement carrier, for instance.

The sensor arm may be configured to move during transport of the implement carrier to avoid obstacles in the sensor arm path.

Further examples and variations are described in the following detailed description in connection with the following drawings.

### Brief description of the drawings

Fig 1 illustrates one example where a sensor module is arranged on an implement carrier.
Fig 2 illustrates an example where a sensor module is instead arranged on an implement.
Fig 3 illustrates an implement carrier with a sensor module arranged on a sensor module arm according to the present disclosure.
Fig 4A and 4B illustrate a sensor module arm which mechanically adjusts a sensor module inclination depending on arm movements.
Fig 5 illustrates a sensor module arm with multiple joints.
Fig 6 illustrates a telescopic sensor module arm.
Fig 7 illustrates a sensor module arm capable of turning sideways with regard to the travelling direction of the implement carrier.
Fig 8 illustrates an implement carrier carrying out surveying during processing of a surface.
Fig 9 illustrates elements of a control system for an implement carrier.
Fig 10 illustrates an implement carrier moving, and the sensor arm adapting to circumstances as the implement carrier moves.

### Detailed description

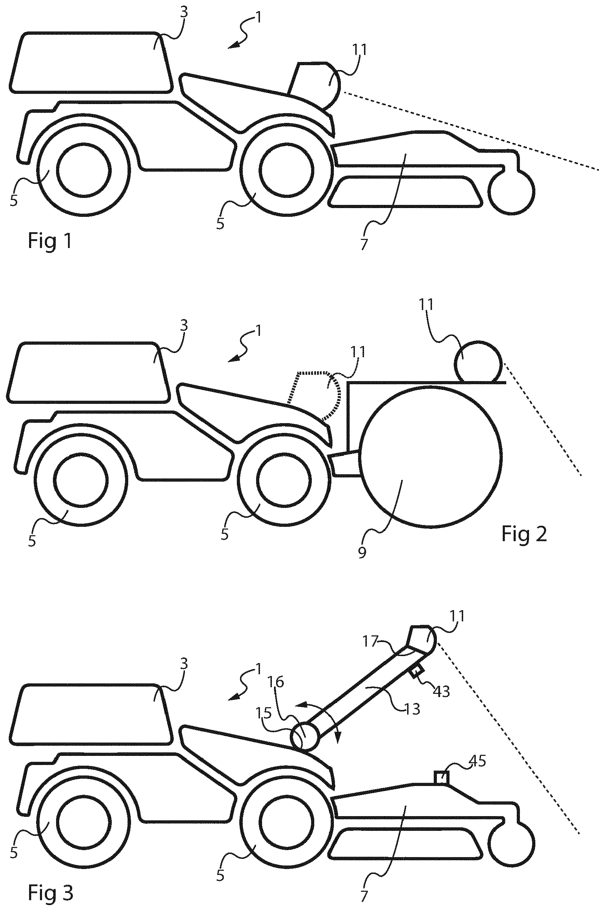

The present disclosure relates to an implement carrier, such as in the form of a self-propelled robotic tool. An implement carrier is shown in fig 1.

The implement carrier 1 comprises an implement carrier body 3 which is driven by a driving arrangement such as wheels 5 or bands. The implement carrier 1 itself need not provide a processing function, although this is certainly possible. Instead, the implement carrier is designed to connect alternatingly with different implements 7 in order to provide a more diverse use. For instance, the implement carrier may be connected to a lawn mower implement to cut lawns in the summer, and to a snow thrower in the winter. Several other implements are possible, such as golf ball collectors, leaf blowers, brushes, etc. The implements are typically at least partly self-supporting, i.e. are at least not entirely suspended from the implement carrier.

Implement carriers of this kind have so far mainly been in the form of manually driven garden tractors, but the recent successful introduction of self-propelled robotic tools such as robotic lawnmowers implies the possibility to combine the two concepts.

A self-propelled tool can navigate using sophisticated navigation means such as GPS navigation and even real time kinematics, RTK, but most robotic lawnmowers at present typically navigate randomly within an area defined by a buried limitation cable that is detected by the lawnmower.

In order to provide an improved operation of the self-propelled tool, at least one sensor module 11 is provided that scans the area surrounding the implement carrier 1 and a connected implement 7, 9, or at least a portion of this area.

This sensor module 11 may contain one or several sensors that provide sensor data to the self-propelled robotic tool's control system. The sensor module 11 may typically include an ultrasound sensor that is capable of detecting obstacles and other objects in the vicinity of the self-propelled robotic tool in order to, for instance, avoid that the robotic tool bumps into and potentially damages nearby objects. Ultrasound sensors, RADAR and LIDAR , for instance, are other suitable solutions for providing this function. Cameras may also be used, and the control system may be configured to detect and optionally classify different objects in the self-propelled robotic tool's vicinity.

This may be used for instance to determine that if object in the vicinity can readily be moved by the robotic tool, e.g. a plastic toy, or not, e.g. a rock.

A camera may also be used to optimize the implement's working characteristics depending on circumstances in the environment. For instance, a camera may acquire images of a lawn to be cut that is used for example to determine a suitable cutting height.

Fig 1 illustrates one way of arranging such a sensor module 11. In this case, the sensor module is associated with the implement carrier 1, e.g. as illustrated is mounted on the top of its body 3 in a position overlooking the area in front of the attached implement 7, in this case a grass mowing tool. While this may work fine together with this implement 7, replacing that implement with another, such as a brushing tool as shown in fig 2, would render the sensor module 11 less useful, as that implement 9 would obscure the view of the sensor module 11 in such a way that no meaningful scanning of the area in front of the implement 9 can take place.

In fig 2, there is instead schematically illustrated another option, where the sensor module 11 is instead located on the implement 9. This of course makes it possible to optimize a sensor module 11 placement with regard to the implement 9 used. However, this comes at the cost of providing a sensor module 11 for each implement used, as well as the cost for providing a sensor module interface between the implement and the implement carrier in order to allow the sensor module 11 to communicated with a control unit of the implement carrier 1.

The present disclosure includes a sensor module 11 that is arranged on a sensor module arm 13 in order to provide a more versatile arrangement as illustrated with an example in fig 3. Very briefly, this arrangement comprises a moveable sensor module arm 13 on which the sensor module 11 is arranged. The arm has a proximal end 15 which is connected to the implement carrier body 3. The sensor module 11 is arranged on the sensor module arm at its distal end 17 or at least a distance from the proximal end 15, which may have a joint 16 where the arm can be moved. Thereby, the location of the sensor module 11 can be altered by moving the sensor module arm 13. This means that a single sensor module 11 can be located at different positions depending for instance on which implement 7, 9 is used. The joint 16 can be located elsewhere on the sensor module arm 13.

The sensor arm may thus be movable between a first position adapted for the first implement 7 and a second position adapted for the second implement 9. It is possible to configure the implement carrier such that it detects the type of implement and adjusts the sensor arm position accordingly.

It may further be desired to move the sensor arm depending on the relative position of the implement carrier 1 and the implement 7. For instance, if the implement 7 is a lawn mower implement, it is suitable to let the sensor module detect objects immediately in front of the implement in order e.g. to avoid that sharp knives of the implement 7 damages object left on the lawn, etc. However, if the implement carrier approaches an uphill section, the implement will become raised in a way that the sensor module instead records the top of the implement 7. Therefore, it may be preferred to raise the elevation of the sensor module arm 13 in response to the implement being raised by the uphill section. This may be accomplished by providing an angular sensor in the interface in between the implement carrier and the implement. It is also possible to make the sensor module are 13 operate based on data from the sensor module 11 that indicates that the sensor need be moved.

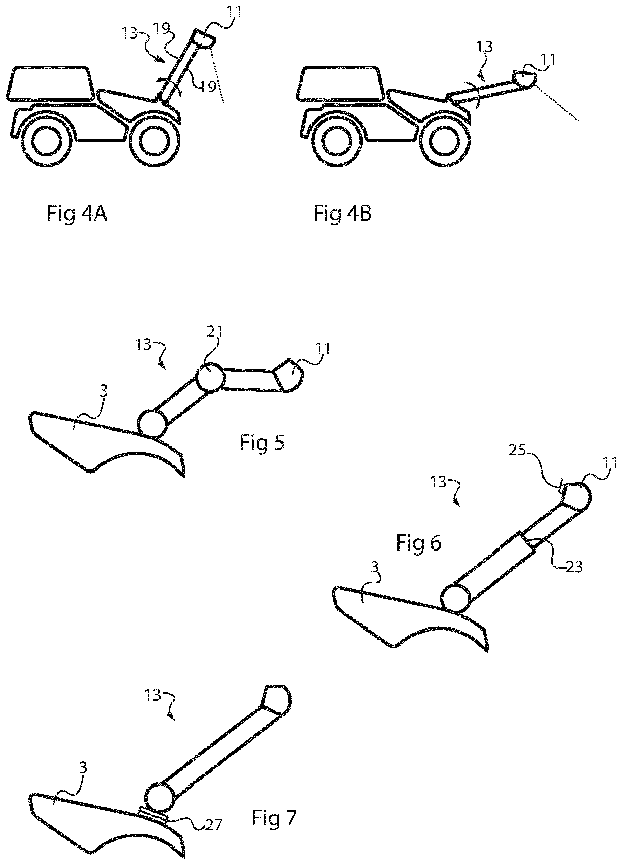

It is possible to make the sensor module 11 direction automatically respond to movements of the sensor module arm 13. This may be accomplished with electronic means in the sensor module 11 that detects movements of the sensor module arm 13 by means e.g. of accelerometers and adjusts the viewing direction of the sensor module 11 accordingly. However, it would also be possible to provide such a function with simple mechanical means. Fig 4A and 4B illustrate a sensor module arm 13 which mechanically adjusts a sensor module 11 inclination depending on sensor module arm movements. The arm includes at least two bars 19 that are pivotably connected, somewhat spaced apart, to both the implement carrier body 3 and the sensor module 11. The bars 19 thereby form a parallelogram, where a moving of the arm 13 as a whole automatically alters a viewing direction of the sensor unit 11. In this way, the sensor module can thus be made to view e.g. an area right in front of the implement regardless of the elevation of the sensor module arm 13.

The sensor module arm can be provided with functions similar to a commercial robotic arm. Fig 5 illustrates a sensor module arm 13 with an additional joint 21 that allows the sensor module 11 to be positioned with an even greater freedom of movement. The sensor module arm 13 may thus comprise one or more pivotable joints in between the proximal end 15 and the sensor module 11.

It is further possible, as illustrated in fig 6, to provide a telescopic function 23 on the sensor module arm 13 that allows it to be lengthened or shortened. It may be suitable to provide navigation equipment such as an RTK unit 25 in connection with the sensor module 11 as this part can be position at an increased height with regard to the remainder of the implement carrier which provides an improved reach to a base station or the like.

As illustrated in Fig 7, it is possible to make the sensor arm 13 pivot sideways by providing a swiveling function, typically with bearings 27 or the like. Thereby, the sensor arm 11 becomes pivotable about an axis which is substantially vertical or at least has a significant vertical component. This gives a greater freedom of movement that allows the sensor module to register data at various other location not necessarily located directly in front of the implement.

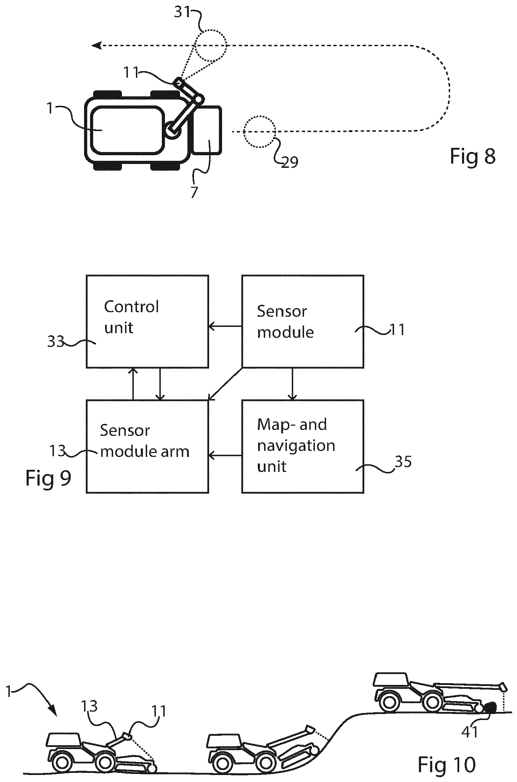

For instance, as illustrated in fig 8 an implement carrier carries out surveying during processing of a surface. Then, instead of just monitoring the surface 29, directly in front of the implement 7, the sensor unit may at least intermittently monitor other areas 31 that, for instance, the implement 1 and the implement carrier 7 are to process at a later stage. This information may be used for instance to update map information that is used to plan processing of a working surface, or to identify the implement carrier's position based on object nearby, etc.

It is also possible to turn the sensor arm 180 degrees from the normally used direction and monitor the area behind the implement carrier 1, thereby allowing the implement carrier to reverse with improved safety.

Fig 9 shows elements of a control system for an implement carrier that illustrate the flexible uses of the combination of the sensor unit 11 and the sensor module arm 13 in the implement carrier 1.

The system generally includes the sensor module 11, the sensor module arm 13, a control unit 33, and optionally a map-and navigation unit 35. The later two could conceivably be included in a remote device to which communication is provided with a radio interface or the like.

Some functions have already been mentioned such as the sensor module 11 providing data to the control unit 33 to improve steering or processing of a working area, and providing information to the map and navigation unit 35 for mapping an area or obtaining positioning data. In addition to those functions, the sensor arm 13 could be configured to move depending on the steering of the implement carrier 1, such that the sensor unit 11 monitors an area to which the implement carrier 1 is about to steer towards rather than just the area straight in front of the implement 7. The sensor module 11 may also be capable of controlling the sensor arm 13 during transport of the implement carrier 1, for instance to avoid obstacles in the sensor arm path.

Fig 10 illustrates an implement carrier 1 moving, and the sensor arm 13 adapting to circumstances to this movement. Compared to when moving on a flat surface as shown to the left, the sensor arm 13 is being elongated when an uphill section raises the implement, as previously discussed. An alternative, as mentioned, is to raise the sensor arm. The right section of fig 10 illustrates a case where the implement reaches an obstacle 41. In this case, the sensor arm is elongated even further to look on the other side of the obstacle 41. It would also be possible to provide the sensor arm 13 with a tool at it distal end to make it possible to remove a light obstacle, for instance a claw.

That illustrated position of the sensor arm could also be useful to look into the fron of the implement, for example to determine whether an object has become stuck therein or if the implement is damaged for some other reason.

It would be possible to temporarily connect the sensor module arm 13 to the implement that provides a fixed position for the sensor module 11, if desired. Then, there may be provided a connector 43 on the sensor module arm for connecting with a socket 45 on a connected implement, cf fig 3.

The present invention is not limited to the above described examples, and can be altered and varied in different ways within the scope of the appended claims.

## Claims

1. An implement carrier (1) comprising an implement carrier body (3) driven by a driving arrangement (5), configured for connecting alternatingly with at least a first (7) and a second implement (9), the implement carrier further comprising at least one sensor module (11) adapted for scanning at least a portion of the area surrounding the implement carrier (1) and a connected implement (7, 9), **characterized by** a moveable sensor module arm (13), having a proximal end (15) connected to the implement carrier body (3), wherein said at least one sensor module (11) is arranged on the sensor module arm at a distance from the proximal end (15).

2. Implement carrier according to claim 1, wherein the sensor arm is movable between a first position adapted for the first implement (7) and a second position adapted for the second implement (9).

3. Implement carrier according to claim 2, wherein the implement carrier is configured to detect an implement type.

4. Implement carrier according to claim 1 to 3, wherein the sensor arm (13) is configured to move depending on the relative position of the implement (7) in relation to the implement carrier (1).

5. Implement carrier according to claim 4, wherein the sensor arm (13) moves based on the difference in elevation between the implement carrier (1) and the implement (7).

6. Implement carrier according to any of claims 1-5, wherein the sensor arm (13) is configured to move depending on the steering of the implement carrier.

7. Implement carrier according to any of the preceding claims, wherein the arm is formed by at least two parts forming a parallelogram, such that moving of the arm alters a viewing direction of the sensor unit (11).

8. Implement carrier according to any of the preceding claims, wherein the sensor module (11) includes sensors in the group: RADAR, ultrasound sensors, cameras, LIDAR, etc.

9. Implement carrier according to any of the preceding claims, wherein the implement carrier (1) is driven by wheels or bands.

10. Implement carrier according to any of the preceding claims, wherein one implement (7) is a lawn mower implement.

11. Implement carrier according to any of the preceding claims, wherein the sensor module arm (13) comprises one or more pivotable joints (21) in between the proximal end and the sensor module (11).

12. Implement carrier according to any of the preceding claims, comprising a connector (43) on the sensor module arm for connecting with a socket (45) on at least one connected implement.

13. Implement carrier according to any of the preceding claims, wherein the sensor arm (13) is telescopic.

14. Implement carrier according to any of the preceding claims, wherein the sensor arm (13) connected to the implement carrier (1) such that it is pivotable about an axis which is substantially vertical.

15. Implement carrier according to any of the preceding claims, wherein the sensor arm (13) is configured to move during transport of the implement carrier (1) to avoid obstacles in the sensor arm path.
